# EUROPEAN PATENT SPECIFICATION

(11) **EP 3 166 911 B1**
(45) Date of publication and mention of the grant of the patent: **09.08.2023**
(21) Application number: 15819711.1
(22) Date of filing: 07.07.2015
(51) Int. Cl.: C05G 3/00, C05G 5/00, C05F 11/08, C05B 17/00, C05D 1/00, C05F 11/10

(54) **INCORPORATION OF BIOLOGICAL AGENTS IN FERTILIZERS**
INTEGRATION VON BIOLOGISCHEN WIRKSTOFFEN IN DÜNGEMITTEL
INCORPORATION D'AGENTS BIOLOGIQUES DANS DES ENGRAIS

(30) Priority: 07.07.2014 US 201462021552 P
(43) Date of publication of application: 17.05.2017
(73) Proprietor: The Mosaic Company, Plymouth, MN 55441 (US)
(72) Inventor: JACOBSON, Kathlene Laurie, Plymouth, MN 55441 (US); HOBBS, Troy William, Plymouth, MN 55441 (US); BALABAN, Lauren A., Plymouth, MN 55441 (US)
(74) Representative: Barker Brettell LLP
(86) International application number: PCT/US2015/039302
(87) International publication number: WO 2016/007460

(56) References cited:
- EP-A1- 0 470 287
- WO-A1-00/64837
- WO-A1-00/64837
- WO-A1-95/06623
- WO-A1-95/08521
- WO-A2-2008/000492
- WO-A2-2014/036572
- JP-A- H02 275 792
- JP-A- H11 209 190
- KR-B1- 100 399 401
- US-A- 5 366 532
- US-B1- 6 311 426
- Manish Vashishtha ET AL: "Improvement in properties of urea by phosphogypsum coating", International Journal of ChemTech Research, 1 January 2010 (2010-01-01), pages 36-44, XP055610426, Retrieved from the Internet: URL:https://www.google.com/url?sa=t&rct=j& q=&esrc=s&source=web&cd=2&ved=2ahUKEwjDzIf i5-HjAhXOZFAKHXRUDJAQFjABegQIARAC&url=http ://citeseerx.ist.psu.edu/viewdoc/download? doi=10.1.1.631.6445&rep=rep1&type=pdf&usg= AOvVaw13sKGUFmOitKFOzllI1v4m [retrieved on 2019-08-01]

## Description

### FIELD OF THE INVENTION

The present invention is directed to biologically dry coated fertilizers and methods of making thereof.

### BACKGROUND OF THE INVENTION

Agricultural inorganic fertilizers typically include a base comprising at least one of three primary inorganic nutrients - nitrogen (N), phosphate (P), and potassium (K). These fertilizers are identified by their NPK rating in which the N value is the percentage of elemental nitrogen by weight in the fertilizer, and the P and K values represent the amount of oxide in the form of P₂O₅ and K₂O that would be present in the fertilizer if all the elemental phosphorus and potassium were oxidized into these forms. The N-P-K proportions or concentration vary across fertilizer types and user needs.

For example, the base fertilizer can comprise a phosphate fertilizer (such as monoammonium phosphate ("MAP"), diammonium phosphate ("DAP"), a potash fertilizer (such as muriate of potash ("MOP")) or other potassium-based fertilizer, or a nitrogen-based fertilizer such as a fertilizer containing urea. The fertilizers can also include any combination of secondary nutrients and/or micronutrients. The secondary nutrients can include sulfur compounds, calcium, and/or magnesium, and the micronutrients can include iron, manganese, zinc, copper, boron, molybdenum, and/or chlorine. The micronutrients and/or secondary nutrients can be added to solution in their elemental form, or as compounds, such as a salt. For example, WO 00/64837 A1 discloses a coated inorganic fertilizer that contains a filamentous fungus for feeding and protecting plants. Also, WO 2008/000492 A2 discloses a coated fertilizer comprising fertilizer particles coated with a biomass composition. Manish Vashishtha ET AL: "Improvement in properties of urea by phosphogypsum coating", International Journal of ChemTech Research, 1 (2010-01-01), pages 36-44 discloses a biological coated dry fertilizer.

Stressed areas, such as those areas where soil conditions are highly saline, experience frequent drought or other stresses, often cannot support agriculture or have materially reduced yield levels. In these conditions, application of fertilizers alone may be insufficient to render the stressed area profitable. Much of the world is covered by such stressed areas, and therefore a solution to make these areas suitable for the profitable cultivation of crops is needed.

### SUMMARY OF THE INVENTION

According to one aspect of the invention, there is provided a biologically coated dry fertilizer comprising: a dry fertilizer granule; and a biological coating applied to the dry fertilizer granule, the biological coating comprising an emulsion of an oil and a solution or suspension comprising water and at least one biological agent, the solution or suspension being emulsified in the oil, wherein the at least one biological agent is a plant extract, microbial agent, and/or a living organism.

According to another aspect, there is provided a method of making a biologically coated dry fertilizer, the method comprising: providing a plurality of granulated pellets comprising a fertilizer; dispersing a biological agent into water to form an aqueous solution or suspension containing the biological agent; emulsifying the aqueous solution or suspension in oil to form a water-in-oil emulsion; and spraying the plurality of granulated pellets with the emulsion, wherein the at least one biological agent is a plant extract, microbial agent, and/or a living organism.

Biological-laden or -inoculated fertilizer granules includes a dry fertilizer granule, and particularly an N-P-K based fertilizer (in which each of N, P, and K range from 0 to 100% relative content of each element), and a biological coating containing one or more biological agents or compositions, or "biologicals", applied to the dry fertilizer granule. Biological agents or compositions, or "biologicals," are plant extracts, microbial agents, and/or other living organisms. The biological agent can comprise microorganisms, including, but not limited to, one or more species from a bacterial genus such as, but not limited to, Bacillus, Rhizobium, Azobacter, and Azospirillum, one or more species from a fungal genus or fungi such as Aspergillus, Mycorhizzae, Beauveria, Metarhizium, and Trichoderma, and/or one or more species from a yeast genus such as Saccharomyces, Schizosaccharomyces, Sporobolomyces, Candida, Trichosporon, and Rhodosporidium. Optionally, in addition to the biological agent, antimicrobial agents, pesticides, insecticides, fungicides, surfactants, emulsifiers, pigments, dyes, and/or other additives can be combined with the biological agent(s) in a biological composition. The biological coating material contains a water-in-oil emulsion of an oil and a solution of water and one or more biologicals. In other words, the biologicals, and optional other additives, are dispersed in water to form a biological composition, and then the dispersion or solution is emulsified with oil, such that the biologicals are encapsulated by the water phase.

Also disclosed, but not according to the invention, is a biological-laden fertilizer that can be made by a process including providing a plurality of granulated pellets comprising a fertilizer, mixing the plurality of granulated pellets, and spraying or otherwise coating the plurality of granulated pellets with such a biological-containing coating material.

The figures and the detailed description that follow more particularly exemplify these embodiments.

### BRIEF DESCRIPTION OF THE DRAWINGS

Embodiments of the invention may be more completely understood in consideration of the following detailed description in connection with the accompanying drawings, in which:
Fig. 1 is a schematic illustration of a process for manufacturing a dry phosphate-based fertilizer, according to an embodiment.
Fig. 2 is a schematic illustration of a process for manufacturing a dry potash-based fertilizer, according to an embodiment.
Fig. 3 is a perspective view of a spraying system configured to apply a solution including biologicals to a dry fertilizer, according to an embodiment.
Fig. 4 is a schematic illustration of a process for manufacturing a biological containing emulsion, according to an embodiment.

While the invention is amenable to various modifications and alternative forms, specifics thereof have been shown by way of example in the drawings and will be described in detail. It should be understood, however, that the intention is not to limit the invention to the particular embodiments described.

### DETAILED DESCRIPTION OF THE DRAWINGS

Plant extracts, microbial agents, and/or other living organisms, such as, for example, endophytes, fungi, yeasts, and bacteria, can be added to dry fertilizers to improve plant health and overall crop yield. The biologicals are added to fertilizer in the form of an emulsion, so that the biological can be suspended in water without undesirably increasing the moisture content of the fertilizer beyond a critical relative humidity at which the fertilizer is more likely to cake. Use of fertilizers containing such biologicals can be sufficient to render stressed areas more profitable.

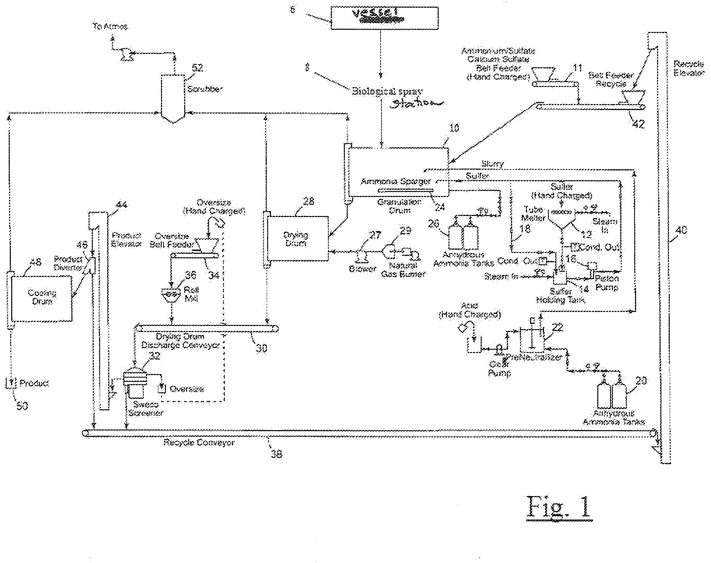

Fig. 1 is a schematic illustrating a non-limiting embodiment of a system that uses a process known as granulation to produce dry phosphate fertilizers. In one non-limiting embodiment, the fertilizer granules are formed using the granulation methods described in U.S. Patent No. 6,544,313 (‴313 'Patent") entitled "Sulfur-Containing Fertilizer Composition and Method for Preparing Same,". In another non-limiting embodiment, the fertilizer granules are formed using the granulation methods described in U.S. Patent No. 7,497,891 entitled "Method For Producing A Fertilizer With Micronutrients".

The granulation system illustrated in Fig. 1 is similar to the granulation process shown in Fig. 1 of the '313 patent, and also includes vessel 6 and spray or sparger 8. Vessel 6 is a device or vessel for generating a biological coating material comprising a solution, dispersion, or emulsion containing biologicals. For example, one or more biologicals, in various non-limiting embodiments and combinations as described throughout, can be dissolved or dispersed in oils, in water, in emulsions thereof, or any other suitable carrier medium in vessel 6.

As discussed above, examples of biologicals include one or more species from a bacterial genus such as, but not limited to, Bacillus, Rhizobium, Azobacter, and Azospirillum, one or more species from a fungal genus or fungi such as Aspergillus, Mycorhizzae, Beauveria, Metarhizium, and Trichoderma, and/or one or more species from a yeast genus such as Saccharomyces, Schizosaccharomyces, Sporobolomyces, Candida, Trichosporon, and Rhodosporidium. Optionally, in addition to the biological agent, antimicrobial agents, pesticides, insecticides, fungicides, surfactants, emulsifiers, pigments, dyes, and/or other additives can be combined with the biological agent(s) in a biological composition. Non-limiting examples of compositions containing biological agents and other additives can be found in U.S. Patent Application Publication Nos. 2015/0148228 (entitled "Composition Comprising a Biological Control Agent and a Fungicide"); 2015/0141246 (entitled "Compositions Comprising a Biological Control Agent and an Insecticide"); 2015/0141245 (entitled "Compositions Comprising a Biological Control Agent and a Fungicide from the Group Consisting of Inhibitors of the Respiratory Chain at Complex I or II); and 2015/0141244 (entitled "Compositions Comprising a Biological Control Agent and an Insecticide").

One or more of these biologicals (or others and/or other additives) can be dissolved into or suspended in the carrier medium in vessel 6. In embodiments, vessel 6 can be a shear mixer, emulsifier, roller, or shaker/agitator, for example.

In an embodiment, the biological coating emulsion that is formed in vessel 6 is sprayable via spray station 8. Biological spray station 8 can be used to sparge/spray the solution onto dry fertilizer. Biological spray station 8 can be positioned within or proximate dry fertilizer at granulation drum 10, according to the embodiment shown in Fig. 1. In various alternative embodiments, the biological coating emulsion could be applied to dry fertilizer at other stages of the production of fertilizer and/or via other means such as curtain coating, drum coating, or the like. For example, the biological coating emulsion could be applied to the fertilizer after the granulation process is complete (i.e., to product 50). Alternatively, the biological coating emulsion could be applied to any of the inputs to granulation drum 10, including the slurry from preneutralizer 22, the sulfur from piston pump 16, or the sulfates from belt feeder 11. In some cases, biologicals included in embodiments can be applied at temperatures ranging from 21.11°C (70°F) to 98.89°C (210°F), or more particularly, from 21.11°C (70°F) to 82.22°C (180°F), or more particularly, from 21.11°C (70°F) to 71.11°C (160°F).

In one embodiment, the system includes one or more spray stations 8 for application of a biological emulsion in combination with one or more other additives. For example, spray stations 8 can be used to apply a de-dust oil to fertilizer granules in addition to a emulsion containing biological, either sequentially or simultaneously.

Biologicals applied accordingly have the potential to enhance the growth and development of plants as well as function as a bio-pesticide to treat plant pests, such as, for example, plant diseases. Application rates of the liquid-biological mixture can be in the range of 1-10 L/907.185 kg (1-10 L/dry ton) of fertilizer, for example. In some embodiments, the biological-inoculated composition can be applied to dry fertilizer in the range of 2-3 L/907.185 kg (2-3 L/dry ton) of fertilizer. After application, fertilizers can possess various densities of CFUs. In one embodiment, fertilizers can be sprayed with biological spray station 8 until they have a biological concentration of 10⁶ CFU/g or more.

Once the fertilizer has been treated with biologicals, it can be applied to soil via broadcasting, banding or other potential means. The fertilizer acts as the delivery method for introducing biologicals to the soil. Once in the soil, the biological targets the plant rhizosphere and reduces the plant stress in one or more of several ways such as in the following descriptions. For example, biologicals can compete with pathogens for nutrients at the root surface. Further, biologicals can produce toxins that inhibit growth and reproduction of pathogens. Biologicals can produce stimulatory compounds absorbed by the roots of plants, and can also parasitize fungal pathogens, insects, or nematodes.

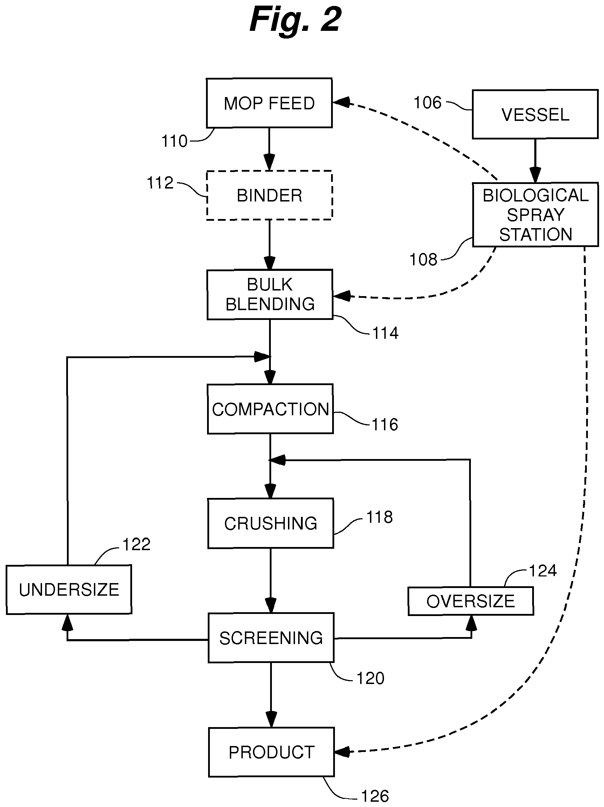

Fig. 2 is a schematic illustrating a system that uses a process known as compaction to produce dry potash fertilizers. Similarly to the granulation process shown in Fig. 1, biologicals may be added at various points in a compaction process. As such, potash fertilizer can act as a carrier for the biologicals that are added in an emulsion.

One example of potash fertilizer manufacturing process shown in Fig. 2 includes the steps of providing a raw fertilizer material feed, shown here as muriate of potash (MOP) feed 110 for exemplary purposes only. One of ordinary skill in the art would recognize that other potash sources can also be contemplated. Optionally, a binder can be added at step 112. The fertilizer is blended in bulk at step 114. Steps 116-124 are a loop for properly sizing the finished fertilizer pellets. At step 116, compaction takes place, and at step 118 the compacted MOP (and any additives) are crushed. At step 120, the crushed MOP is screened for size. Undersized MOP pellets are returned, via step 122, to be re-compacted. Oversized MOP pellets are returned, via step 124, to be re-crushed. Those pellets that fit within some desired size parameters exit the sizing loop and make up the final product, at step 126.

In the embodiment shown in Fig. 2, and similar to the process of Fig. 1, a biological coating emulsion is formed in vessel 106, that is then applied via the biological application or spray station 108, which can be applied to a potash fertilizer at any of several steps in the process of making the fertilizer. Vessel 106 and biological spray station 108 are substantially similar to vessel 6 and biological spray station 8 of Fig. 1, respectively. The biological coating emulsion can be applied to the MOP fertilizer pellets at one or more steps, as shown. For example, the biological coating solution can be sparged onto the MOP feed at step 110. Alternatively, the biological coating emulsion can be added at the bulk blending 114 step. Additionally or alternatively, the biological coating emulsion can be added to the product 126.

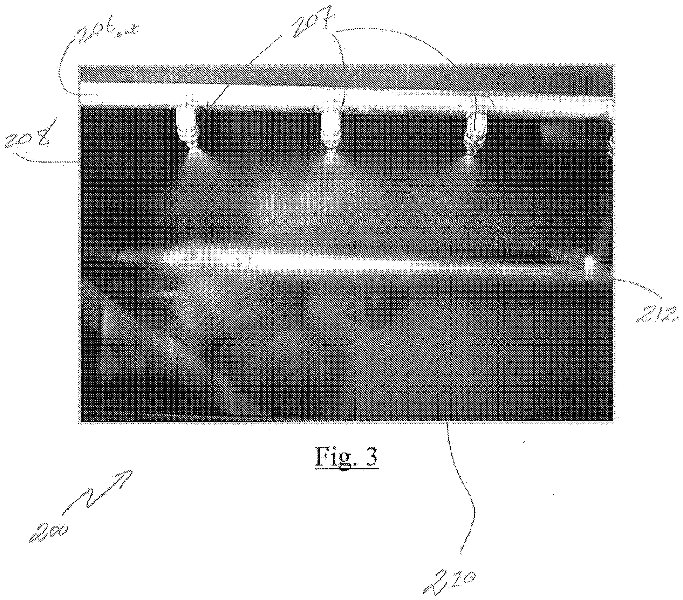

Fig. 3 is a perspective view of a mixing system 200 by which the biologicals described with respect to Figs. 1 and 2 can be added to dry fertilizer, according to an embodiment.

Mixing system 200 includes pipe 206ₒᵤₜ, which is the outlet of a vessel. Pipe 206ₒᵤₜ is connected to sprayers 207. Sprayers 207 deliver biological coating emulsion 208 onto fertilizer 210. While sprayers 207 are spraying biological spray 208, mixer 212 agitates fertilizer 210, to promote even distribution of biological coating emulsion 208 onto the pellets of fertilizer 210.

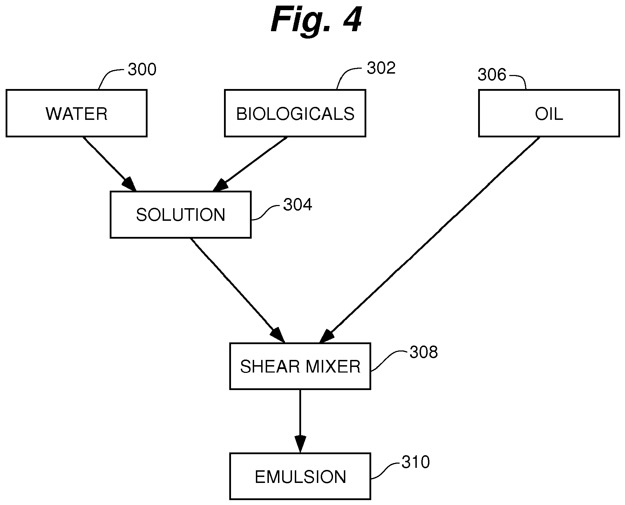

Fig. 4 is a flow chart depicting an emulsion process. Water 300 and biologicals 302 (and optional other additives not shown) are combined into solution or suspension 304. Solution 304 is combined with oil 306 in a shear mixer 308 to form emulsion 310. In some embodiments, shear mixer 308 generates emulsion 310 that contains pockets of solution 304, such that biologicals 302 are dispersed only in water 300. This facilitates the use of biologicals 302 that are more stable in water 300 than oil 306, as well as allowing subsequent coating of fertilizer in such a way that the relative humidity or moisture content of the fertilizer is not substantially increased. This can be important because significant increase in the water content of fertilizers can cause clumping or sintering.

In some embodiments, oil 306 can be a dedusting oil, such as those described in WIPO Publication No. WO 2015/026806, entitled SYSTEM AND METHODS FOR ADDITION OF BENEFICIAL AGRICULTURAL, BIOLOGICAL, AND/OR DEDUSTING ADDITIVES TO GRANULAR FERTILIZERS and/or can comprise oil having the trade name Dustrol^{®}, Dustrol Plus^{®}, VM160, N100, N150, N300 etc., mineral oils, vegetable oils, optionally inoculated with biologicals.

In embodiments, the biological-inoculated liquid or aqueous portion of the emulsion can have a biological concentration equal to or greater than 10⁹ CFU/g. For example, the biologicals 302 are present in the emulsion 310 at a final concentration of 10³ to 10¹² CFU (colony forming units)/g, and more particularly 10⁶ to 10⁹ CFU/g. The coating is then added to the fertilizer, such as, for example 4.1×10⁻³ L (4.1 mls) of an aqueous solution comprising biologicals can be added to every 0.4536 kg (1 lb) of fertilizer, or alternatively, 10¹² to 10¹⁵ CFU/L can be added to liquid fertilizer to achieve the above final target concentration.

According to this embodiment, water 300 is inoculated with biologicals 302. Optional other additives, such as those described above, can also be dispersed within water 300. An oil, such as mineral oil, load-out oil, and/or another oil source, is obtained and used as oil 306 such that the inoculated water solution 304 is mixed with the oil 306 using a high-shear mixer or blender to create water particles or pockets (containing biological and optional other additives) inside the oil. In an embodiment, the water particles can comprise 30-80% of the total emulsion. In this way, the critical relative humidity of the fertilizer is no changed or increased, thereby reducing the probability of caking. Because inoculating oils 306 with biologicals 302 directly can hinder the viability of the biological, suspending the biological in water in an oil-in water or water-in-oil emulsion can provide increased stability and/or efficacy. As such, it is often desirable to use water to protect the health of the biological 302, but reduce the volume of water 300 on the fertilizer that is subsequently coated by emulsion 310 by suspending the biological-laden water solution 304 in oil.

Various embodiments of systems, devices and methods have been described herein. These embodiments are given only by way of example and are not intended to limit the scope of the invention.

## Claims

1. A biologically coated dry fertilizer comprising:
a dry fertilizer granule; and
a biological coating applied to the dry fertilizer granule, the biological coating comprising an emulsion of an oil and a solution or suspension comprising water and at least one biological agent, the solution or suspension being emulsified in the oil,
wherein the at least one biological agent is a plant extract, microbial agent, or a living organism.

2. The biological-laden dry fertilizer of claim 1, wherein the at least one biological agent is a bacteria selected from the group consisting of Bacillus, Rhizobium, Azobacter, Azospirillum, and combinations thereof.

3. The biological-laden dry fertilizer of claim 1, wherein the at least one biological agent is a fungus selected from the group consisting of Aspergillus, Mycorhizzae, Beauveria, Metarhizium, and Trichoderma, Saccharomyces, Schizosaccharomyces, Sporobolomyces, Candida, Trichosporon, and Rhodosporidium, and combinations thereof.

4. The biological-laden dry fertilizer of claim 1, wherein the biological coating further comprises an additive selected from the group consisting of peptides, lipopetides, hormones, peptide hormones, siderophores, glycopepetides, humates, surfactants, vitamins, enzymes, amino acids, nucleic acids and combinations thereof.

5. The biological-laden dry fertilizer of either claim 2 or 3, wherein the at least one biological agent comprises a fungus or a bacterium applied to the fertilizer granule such that a final concentration of biological agent is of 10³ to 10¹² CFU/g.

6. The biological-laden dry fertilizer of any one of the previous claims, wherein the dry fertilizer granule comprises a phosphate material.

7. The biological-laden dry fertilizer of any one of the previous claims, wherein the dry fertilizer granule comprises potash material.

8. A method of making a biologically coated dry fertilizer, the method comprising:
providing a plurality of granulated pellets comprising a fertilizer;
dispersing a biological agent into water to form an aqueous solution or suspension containing the biological agent;
emulsifying the aqueous solution or suspension in oil to form a water-in-oil emulsion; and
spraying the plurality of granulated pellets with the emulsion,
wherein the biological agent is a plant extract, microbial agent, or a living organism.

9. The method of claim 8, wherein the oil is a dedusting oil.

10. The method of claim 8 or 9, wherein the method further comprises generating the emulsion with a high-speed shear mixer.

11. The method of claim 8, wherein the method further comprises screening the size of the sprayed plurality of granulated fertilizer.

12. The method of claim 11, wherein spraying the plurality of granulated pellets occurs prior to screening.

13. The method of claim 11, wherein spraying the plurality of granulated pellets occurs after screening.

14. The method of any one of claims 8 to 13, wherein providing a plurality of granulated fertilizer pellets comprises compaction or granulation.

15. The method of any one of claims 8 to 10, wherein the granulated fertilizer pellets comprise a phosphate material.

## Patentansprüche

1. Biologisch beschichtetes Trockendüngemittel, umfassend:
ein Trockendüngemittelgranulat und
eine auf das Trockendüngemittelgranulat aufgebrachte biologische Beschichtung, wobei die biologische Beschichtung eine Emulsion eines Öls und einer Wasser und mindestens ein biologisches Mittel umfassenden Lösung oder Suspension umfasst, wobei die Lösung bzw. Suspension in dem Öl emulgiert ist,
wobei sich bei dem mindestens einen biologischen Mittel um einen Pflanzenextrakt, ein mikrobielles Mittel oder einen lebenden Organismus handelt.

2. Biologisch beladenes Trockendüngemittel nach Anspruch 1, wobei es sich bei dem mindestens einen biologischen Mittel um ein aus der aus Bacillus, Rhizobium, Azobacter, Azospirillum und Kombinationen davon bestehenden Gruppe ausgewähltes Bakterium handelt.

3. Biologisch beladenes Trockendüngemittel nach Anspruch 1, wobei es sich bei dem mindestens einen biologischen Mittel um einen aus der aus Aspergillus, Mycorhizzae, Beauveria, Metarhizium und Trichoderma, Saccharomyces, Schizosaccharomyces, Sporobolomyces, Candida, Trichosporon und Rhodosporidium und Kombinationen davon bestehenden Gruppe ausgewählten Pilz handelt.

4. Biologisch beladenes Trockendüngemittel nach Anspruch 1, wobei die biologische Beschichtung weiterhin ein aus der aus Peptiden, Lipopetiden, Hormonen, Peptidhormonen, Siderophoren, Glykopeptiden, Humaten, Tensiden, Vitaminen, Enzymen, Aminosäuren, Nukleinsäuren und Kombinationen davon bestehenden Gruppe ausgewähltes Additiv umfasst.

5. Biologisch beladenes Trockendüngemittel nach Anspruch 2 oder 3, wobei das mindestens eine biologische Mittel einen Pilz oder ein Bakterium umfasst, der/das so auf das Düngemittelgranulat aufgebracht ist, dass die Endkonzentration des biologischen Mittels 10³ bis 10¹² CFU/g beträgt.

6. Biologisch beladenes Trockendüngemittel nach einem der vorhergehenden Ansprüche, wobei das Trockendüngemittelgranulat Phosphatmaterial umfasst.

7. Biologisch beladenes Trockendüngemittel nach einem der vorhergehenden Ansprüche, wobei das Trockendüngemittelgranulat Pottaschematerial umfasst.

8. Verfahren zur Herstellung eines biologisch beschichteten Trockendüngemittels, wobei das Verfahren Folgendes umfasst:
die Bereitstellung einer Vielzahl von ein Düngemittel umfassenden granulierten Pellets,
das Dispergieren eines biologischen Mittels in Wasser unter Bildung einer das biologische Mittel enthaltenden wässrigen Lösung oder Suspension,
das Emulgieren der wässrigen Lösung bzw. Suspension in Öl unter Bildung einer Wasser-in-Öl-Emulsion und
das Besprühen der Vielzahl granulierter Pellets mit der Emulsion,
wobei sich bei dem biologischen Mittel um einen Pflanzenextrakt, ein mikrobielles Mittel oder einen lebenden Organismus handelt.

9. Verfahren nach Anspruch 9, wobei sich bei dem Öl um ein Entstaubungsöl handelt.

10. Verfahren nach Anspruch 8 oder 9, wobei das Verfahren weiterhin die Bildung der Emulsion mit einem Hochgeschwindigkeits-Schermischer umfasst.

11. Verfahren nach Anspruch 8, wobei das Verfahren weiterhin das Sieben der besprühten Vielzahl granulierter Düngemittel umfasst.

12. Verfahren nach Anspruch 11, wobei das Besprühen der Vielzahl granulierter Pellets vor dem Sieben erfolgt.

13. Verfahren nach Anspruch 11, wobei das Besprühen der Vielzahl granulierter Pellets nach dem Sieben erfolgt.

14. Verfahren nach einem der Ansprüche 8 bis 13, wobei die Bereitstellung einer Vielzahl granulierter Düngemittelpellets Verdichtung oder Granulierung umfasst.

15. Verfahren nach einem der Ansprüche 8 bis 10, wobei die granulierten Düngemittelpellets ein Phosphatmaterial umfassen.

## Revendications

1. Engrais sec à revêtement biologique comprenant :
un granule d'engrais sec ; et
un revêtement biologique appliqué sur le granule d'engrais sec, le revêtement biologique comprenant une émulsion d'une huile et d'une solution ou suspension comprenant de l'eau et au moins un agent biologique, la solution ou suspension étant émulsifiée dans l'huile,
dans lequel l'au moins un agent biologique est un extrait de plante, un agent microbien ou un organisme vivant.

2. Engrais sec à charge biologique selon la revendication 1, dans lequel l'au moins un agent biologique est une bactérie choisie dans le groupe constitué de Bacillus, Rhizobium, Azobacter, Azospirillum, et des combinaisons de ceux-ci.

3. Engrais sec à charge biologique selon la revendication 1, dans lequel l'au moins un agent biologique est un champignon choisi dans le groupe constitué d'Aspergillus, Mycorhizzae, Beauveria, Metarhizium, et Trichoderma, Saccharomyces, Schizosaccharomyces, Sporobolomyces, Candida, Trichosporon et Rhodosporidium, et des combinaisons de ceux-ci.

4. Engrais sec à charge biologique selon la revendication 1, dans lequel le revêtement biologique comprend en outre un additif choisi dans le groupe constitué de peptides, lipopeptides, hormones, hormones peptidiques, sidérophores, glycopeptides, humates, tensioactifs, vitamines, enzymes, acides aminés, acides nucléiques et des combinaisons de ceux-ci.

5. Engrais sec à charge biologique de l'une des revendications 2 ou 3, dans lequel l'au moins un agent biologique comprend un champignon ou une bactérie appliqué sur le granule d'engrais de sorte qu'une concentration finale de l'agent biologique est de 10³ à 10¹² UFC/g.

6. Engrais sec à charge biologique selon l'une quelconque des revendications précédentes, dans lequel le granule d'engrais sec comprend un matériau de phosphate.

7. Engrais sec à charge biologique selon l'une quelconque des revendications précédentes, dans lequel le granule d'engrais sec comprend un matériau de potasse.

8. Procédé de fabrication d'un engrais sec à revêtement revêtu biologique, le procédé comprenant :
la fourniture d'une pluralité de pastilles granulées comprenant un engrais ;
la dispersion d'un agent biologique dans de l'eau pour former une solution ou suspension aqueuse contenant l'agent biologique ;
l'émulsification de la solution ou suspension aqueuse dans de l'huile pour former une émulsion eau dans huile ; et
la pulvérisation de la pluralité de pastilles granulées avec l'émulsion,
dans lequel l'agent biologique est un extrait de plante, un agent microbien ou un organisme vivant.

9. Procédé selon la revendication 8, dans lequel l'huile est une huile de dépoussiérage.

10. Procédé selon la revendication 8 ou 9, le procédé comprenant en outre la génération de l'émulsion avec un mélangeur à cisaillement à haute vitesse.

11. Procédé selon la revendication 8, dans lequel le procédé comprend en outre le criblage de la taille de la pluralité d'engrais granulés pulvérisés.

12. Procédé selon la revendication 11, dans lequel la pulvérisation de la pluralité de pastilles granulées se produit avant le criblage.

13. Procédé selon la revendication 11, dans lequel la pulvérisation de la pluralité de pastilles granulées se produit après le criblage.

14. Procédé selon l'une quelconque des revendications 8 à 13, dans lequel la fourniture d'une pluralité de pastilles d'engrais granulées comprend un compactage ou une granulation.

15. Procédé selon l'une quelconque des revendications 8 à 10, dans lequel les pastilles d'engrais granulées comprennent un matériau de phosphate.
